# EUROPÄISCHE PATENTANMELDUNG

(11) **EP 1 094 245 A2**
(43) Veröffentlichungstag der Anmeldung: **25.04.2001**
(21) Anmeldenummer: 00122082.1
(22) Anmeldetag: 11.10.2000
(51) Int. Cl.: F16H 7/12, E05F 15/14, E05F 15/16

(54) **Antriebsvorrichtung mit Zugmittelgetriebe und Zugmittelspannvorrichtung sowie Zugmittelspannvorrichtung zur Verwendung darin**

(30) Priorität: 20.10.1999 DE 19950594; 24.11.1999 DE 19956536; 21.01.2000 DE 10002606
(71) Anmelder: Hörmann KG Antriebstechnik, 33790 Halle i. Westfalen (DE)
(72) Erfinder: Schütz, Viktor, 59755 Arnsberg (DE); Sanke, Michael, 33378 Rheda-Wiedenbrück (DE)
(74) Vertreter: Flügel, Otto, Dipl.-Ing.

(57) **Zusammenfassung**

Die Erfindung betrifft eine Antriebsvorrichtung (12) zum Antreiben von Toren, insbesondere Garagentoren, Türen, Fenstern oder dergleichen zwischen einer Öffnungs- und einer Schließstellung bewegbaren Abschlüssen von Bauwerken oder Einfriedungen, mit einem Zugmittelgetriebe (10), das ein Zugmittel, insbesondere einen Zahngurt (16), zur Kraftübertragung und eine Zugmittelspannvorrichtung (26) zur Aufrechterhaltung einer Zugmittelspannung des Zugmittels (16) umfasst, wobei die Zugmittelspannvorrichtung (26) ein Kraftspeicherelement (56, 56) zum Liefern einer die Zugmittelspannung aufrechterhaltende Kraft aufweist. Zum Schaffen einer automatisch nachstellenden Zugmittelspannung innerhalb der Einsatzzeit der Antriebsvorrichtung (12) ohne Wartungsmaßnahmen wird vorgeschlagen, dass die Zugmittelspannvorrichtung (26) weiter eine Knarreneinrichtung oder dergleichen in einer Richtung sperrende und in die Gegenrichtung bewegbare Sperr- oder Freilaufeinrichtung (34) umfasst, die derart angeordnet und/oder ausgebildet ist, dass sie ein Spannen oder Weiterspannen des Zugmittels (16) durch Ziehen, insbesondere über an eine Spannrolle (28), an dem Zugmittel (16) in einer Spannrichtung (38) zulässt, in Gegenrichtung aber sperrt und dass das Kraftspeicherelement (56, 57) die Knarren-, Sperr- oder Freilaufeinrichtung (34) in die Spannrichtung (38) vorspannt.

## Beschreibung

Die Erfindung betrifft eine Antriebsvorrichtung zum Antreiben von Toren, insbesondere Garagentoren, Türen, Fenstern oder dergleichen zwischen einer Öffnungs- und einer Schließstellung bewegbaren Abschlüssen von Bauwerken oder Einfriedungen, mit einem Zugmittelgetriebe, das ein Zugmittel, insbesondere einen Zahngurt, zur Kraftübertragung und eine Zugmittelspannvorrichtung zur Aufrechterhaltung einer Zugmittelspannung des Zugmittels umfasst, wobei die Zugmittelspannvorrichtung ein Kraftspeicherelement zum Liefern einer die Zugmittelspannung aufrechterhaltenden Kraft aufweist. Außerdem betrifft die Erfindung eine Zugmittelspannvorrichtung für eine solche Antriebsvorrichtung mit einem Kraftspeicherelement zum Liefern einer die Zugmittelspannung eines zu spannenden Zugmittels aufrechterhaltenden Kraft. Eine solche Antriebsvorrichtung und eine solche Zugmittelspannvorrichtung sind aus der EP 0 732 476 A1 bekannt.

Diese bekannte Antriebsvorrichtung dient insbesondere zum Öffnen und Schließen eines Überkopf bewegbaren Garagentores. Dabei wird eine Drehbewegung eines motorisch angetriebenen Antriebsrades durch das Zugmittelgetriebe in eine translatorische Bewegung eines an das Torblatt anschließbaren Mitnehmers umgewandelt. Hierzu ist als Zugmittel ein Zahngurt vorgesehen, der formschlüssig in das Antriebsrad um diesen herumgelegt eingreift und am anderen Ende um eine Umlenkrolle geführt ist. Die beiden Enden des Zahngurtes sind durch ein als Kopplungseinrichtung zum Ankoppeln des Mitnehmers ausgebildetes Gurtschloss angeschlossen, so dass das Zugmittel insgesamt eine Endlosschleife bildet. Die Umlenkrolle ist an einem Umlenkrollenhalter gelagert. Der Zahngurt ist durch eine Zugmittelspannvorrichtung spannbar, welche einen mit einer Umlenkrollenhalterung verbundenen Bolzen, eine Spannschraube, eine Schraubendruckfeder und eine ortsfeste Halterung umfasst. Die Umlenkrollenhalterung ist in einer zur Führung des Mitnehmers vorgesehenen Führungsschiene verschiebbar angeordnet und über den Bolzen federnd gegenüber dem die ortsfeste Halterung aufweisenden einen Ende der Führungsschiene abgestützt. Hierzu ist die Schraubendruckfeder auf das der Umlenkrollenhalterung gegenüberliegende Ende des Bolzens aufgeschoben, wobei die Stellung der Umlenkrollenhalterung relativ zur Führungsschiene über eine Mutter justiert wird, die auf den Bolzen unter Zwischenlagerung der Schraubendruckfeder aufgeschraubt ist.

Durch diese Zugmittelspannvorrichtung ist eine Zugmittelspannung über die Justierung der Mutter einstellbar, diese Zugmittelspannung wird mit Hilfe der Druckfeder elastisch aufrechterhalten.

Für den ordnungsgemäßen Betrieb des das Zugmittel verwendenden Antriebs ist die richtige Zugmittelspannung wichtig. Ein zu schlaffes Zugmittel führt zu erhöhter Schwingung und damit u. U. zu erhöhter Geräuschentwicklung durch Schlagen des Zugmittels an die Führungsschiene. Bei stark nachlasserider Zugspannung kann es auch zu einem Rutschen des Zugmittels über das Antriebsrad kommen, wobei Beschädigungen der Zähne des Zugmittels nicht auszuschließen sind. Eine von vorneherein eingestellte zu hohe Zugmittelspannung führt zu zu großer mechanischer Belastung.

Nachteilig bei der bekannten Zugmittelspannvorrichtung ist, dass der Vorspannbereich zu klein ist, und um die Vorspannung des Zugmittels in der gesamten Einsatzzeit der Antriebsvorrichtung zu gewährleisten, benötigt man Wartungsmaßnahmen wie Spannen der Druckfeder oder Kürzung des Zugmittels.

Der Erfindung liegt die Aufgabe zugrunde, eine Antriebsvorrichtung der eingangs genannten Art bzw. eine darin verwendbare Zugmittelspannvorrichtung derart auszubilden, dass die zuvor gezeigten Nachteile vermieden werden und eine konstruktiv einfache und wartungsfreie Zugmittelspannvorrichtung geschaffen wird.

Ausgehend von der Antriebsvorrichtung wird diese Aufgabe dadurch gelöst, dass die Zugmittelspannvorrichtung weiter eine Knarreneinrichtung oder dergleichen in einer Richtung sperrende und in die Gegenrichtung bewegbare Sperr- oder Freilaufeinrichtung umfasst, die derart angeordnet und/oder ausgebildet ist, dass sie ein Spannen oder Weiterspannen des Zugmittels durch Ziehen, insbesondere über eine Spannrolle, an dem Zugmittel in einer Spannrichtung zulässt, in Gegenrichtung aber sperrt und dass das Kraftspeicherlement die Knarren-, Sperr- oder Freilaufeinrichtung in die Spannrichtung vorspannt.

Eine erfindungsgemäße Zugmittelspannvorrichtung ist demgemäss gekennzeichnet durch eine Knarreneinrichtung oder dergleichen in einer Richtung sperrende und in die Gegenrichtung bewegbare Sperr- oder Freilaufeinrichtung, die derart angeordnet und/oder ausgebildet ist, dass sie in Spannen oder Weiterspannen des Zugmittels durch Ziehen, insbesondere über an eine Spannrolle, an dem Zugmittel in einer Spannrichtung zulässt, in Gegenrichtung aber sperrt, wobei das Kraftspeicherlement die Knarren-, Sperr- oder Freilaufeinrichtung in die Spannrichtung vorspannt.

Durch diese Maßnahmen ist eine automatisch erfolgende Nachspannung des Zugmittels bei nachlassender Zugmittelspannung erreichbar. In bevorzugter Ausführung erfolgt diese Nachspannung stufenweise. Dabei kann der Vorspannweg der Zugmittelspannvorrichtung beliebig lang ausgelegt werden.

In konkreter Ausgestaltung wird eine wie eine Knarre oder Ratsche, die Bewegungen in eine Richtung zulässt, in die entgegengesetzte Richtung aber sperrt, wirkende Einrichtung zur Verhinderung einer Verringerung der Zugmittelspannung vorgeschlagen. Lässt die Zugmittelspannung z. B. aufgrund von Alterungserscheinung nach, so wird die Knarren-, Sperr- oder Freilaufeinrichtung mittels Federn oder dergleichen Kraftspeichern in Spannrichtung weiterbewegt. Dabei sperrt sie sich gegen eine weitere Erschlaffung des Zugmittels.

Eine solche Zugmittelspannvorrichtung ist insbesondere bei der Verwendung von Zahngurten, welche aus einem textilen Band und daran befestigter oder vorgesehener Zähne - beispielsweise angespritzter Zähne aus Kunststoff oder dergleichen - vorteilhaft. Auch wenn solche Spanngurte durch besondere Maßnahmen wie in das Textil eingewebte Metallfasern oder sonstige Verstärkungsfasern gegen eine Dehnung des Gurtes gesichert werden, lässt sich aufgrund der ständigen Zugbeanspruchung des Zugmittels durch Schließ- und Öffnungskraft des zu bewegenden Abschlusses eine ständige (bleibende) Dehnung nie ganz ausschließen. Da solche Antriebsvorrichtungen ohne weiteres sehr lange Lebensdauern erreichen sollen, lässt sich also ohne gesonderte Maßnahmen auch eine Erschlaffung des Zugmittels fast nie ganz ausschließen. Weitere Faktoren, die zu einer Erschlaffung des Zugmittels - z. B. auch Kette - beitragen, sind z. B. Materialabtrag oder sonstige Verschleißerscheinung an Antriebs-, Führungs-, Abtriebs- oder Umlenkrädem oder -rollen, deren Lagerungen oder an dem Zugmittel selbst.

Solche im Laufe der Lebenszeit von Zugmittel verwendenden Antriebsvorrichtungen auftretende Dehnungen des Zugmittels lassen sich mit der erfindungsgemäßen Zugmittelspannvorrichtung automatisch ausgleichen. Vorteilhaft ist auch, dass die Abstützung über die Knarren-, Sperr- oder Freilaufeinrichtung erfolgen kann und nicht über eine Schraubendruckfeder wie im Stand der Technik, wo bei Zugbelastung zunächst diese Feder eingedrückt wird, bevor die Kraft weitergeleitet wird.

Vorteilhafte Ausgestaltungen der Erfindung sind Gegenstand der Unteransprüche.

So ist die Sperr- oder Freilaufeinrichtung besonders einfach herstellbar, wenn sie eine Rasteinrichtung zum stufenweisen Weiterspannen des Zugmittels bei nachlassender Zugspannung aufweist. Im Prinzip sind dabei verschiedene Ausgestaltungen der Knarren-, Sperr- oder Freilaufeinrichtung denkbar. Beispielsweise könnte auch eine wie in einem mechanischen Uhrwerk eingesetzte Knarre in Form eine Knarrenrades eingesetzt werden, wobei das Kraftspeicherelement z. B. eine Spiralfeder, eine Stabfeder oder auch über ein Seil an einer Welle des Knarrenrades angreifendes Gewicht oder dergleichen mehr sein kann. Weitere Beispiele zum Bilden einer solchen Einrichtung wären Freilaufnaben, wie sie aus dem Fahrzeugbau bekannt sind.

Da aber die Zugmittelspannvorrichtung vorteilhafterweise in einer länglichen Führungsschiene untergebracht werden soll, ist aus Platzgründen bevorzugt, dass die Rasteinrichtung nicht zirkular sondern linear ausgebildet ist. Hierzu weist sie gemäß einer Ausgestaltung der Erfindung ein Widerlagerelement und ein längliches Erfassungselement, insbesondere eine Rast- oder Zahnspange, mit einer Reihe vom zum formschlüssigen einrastenden Erfassen des Widerlagers ausgebildeten Rast- oder Hakengliedern, insbesondere Sägenzähnen auf. Das längliche Erfassungselement kann dabei beliebig lang ausgebildet werden, so wie es der zur Verfügung stehende Platz eben zulässt. Über diese Länge und insbesondere die Länge der Reihe von Rast- oder Hakengliedern lässt sich dann der Spannweg, über den das Zugmittel nachgespannt werden kann, auswählen. Ist je nach Art oder zu erwartende Lebensdauer des Zugmittels eine große Dehnung zu erwarten, wird eine entsprechend lange Reihe von Rast- oder Hakengliedern vorzusehen sein.

Mit den jeweiligen Rast- oder Hakengliedern rastet das längliche Erfassungselement an dem Widerlagerelement ein. Eines der beiden Elemente - Erfassungselement oder Widerlagerelement - ist dabei dem Zugmittel zugeordnet, um dieses nachzuspannen und das andere dieser beiden Elemente ist dann ortsfest gelagert. Vorteilhafterweise ist die letztgenannte Lagerung derart, dass die jeweilige Anordnung einstellbar wählbar ist. Auf diese Weise lässt sich eine Grundeinstellung je nach den örtlichen Gegebenheiten an der Montagestelle der Antriebsvorrichtung anpassen. Beispielsweise lässt sich durch Wahl der Anordnung des ortsfesten Elementes ein längeres Zugmittel verwenden, oder die Grundeinstellung der Zugmittelspannung kann erhöht oder erniedrigt werden.

Zum Gewährleisten der sicheren Einrastung bzw. Erfassung zwischen Widerlagerelement und Erfassungselement ist gemäß einer vorteilhaften Ausgestaltung der Erfindung vorgesehen, dass die Rasteinrichtung weiter ein elastisches Element, insbesondere eine Feder wie eine Blattfeder, zum elastischen Vorspannen von Widerlagerelement und Erfassungselement gegeneinander in die Raststellung aufweist.

Das längliche Erfassungselement kann zum Einstellen einer Grundeinstellung an seinem freien Ende mit einer gegenüber den Rast- oder Hakengliedern größer ausgebildeten Anschlageinrichtung zum Erfassen des Widerlagerelements in einer Anfangsstufe versehen sein. Diese Anschlageinrichtung kann z. B. derart sein, dass eine Relativbewegung der beiden Elemente entgegen der Spannvorrichtung über die Anfangsstufe hinaus nicht möglich ist. Beispielsweise kann das Widerlagerelement durch ein Blech oder eine Platte mit einer Öffnung da,in gebildet sein, welche Öffnung durch das längliche Erfassungselement durchgriffen wird, wobei die Anschlageinrichtung eine derartige Ausdehnung aufweist, dass sie nicht durch die Öffnung hindurch geführt werden kann. Andererseits wird die Öffnung aber derart ausgestaltet sein, dass die sich an die Anschlageinrichtung anschließende Reihe von Rast- oder Hakengliedern durch die Öffnung in die nächste Raststufe gleiten können, so wie dies in den beigefügten Figuren gezeigt ist.

Damit die Rast- oder Hakenglieder dabei über die ein Widerlager bildende Öffnungsberandung gleiten kann, sollten das Widerlagerelement und das längliche Erfassungselement nicht nur in Spannrichtung relativ zueinander beweglich sein, sondern zumindest in begrenztem Maße auch in einer hierzu senkrechten Richtung. Dies wird in einer konkreten vorteilhaften Ausgestaltung der Erfindung dadurch ermöglicht, dass das mit dem Zugmittel verbundene Element der Rasteinrichtung - Widerlager- oder Erfassungselement - an einem Spannrollenhalter, an welchem eine Spannrolle drehbar gelagert ist, schwenkbar angelenkt ist.

Das Kraftspeicherelement kann, wie bereits erwähnt, auf verschiedene Art und Weise gebildet sein. So wären z. B. ohne weiteres pneumatische, hydraulische, pyrotechnische oder elektrische Kraftspeicher denkbar. Aus Zuverlässigkeitsgründen sind aber Gewichts- oder Spannungskräfte ausnutzende mechanische Kraftspeicherelemente bevorzugt. So wären auch nach unten bewegbare Gewichte oder dergleichen denkbar. Aus Platzgründen und des einfacheren Einbaus wegen ist aber weiter bevorzugt, dass das Kraftspeicherelement wenigstens eine Feder, insbesondere wenigstens eine Schraubenzugfeder, aufweist, welche die Knarren-, Sperr- oder Freilaufeinrichtung in die Spannrichtung vorspannt. Dabei würde im Prinzip natürlich eine einzelne Schraubenzugfeder ausreichen. Wegen der größeren Möglichkeiten, Kräfte gleichmäßig zu verteilen, ist aber das Vorsehen wenigstens zweier Schraubenzugfedern vorteilhaft, die an einem Ende ortsfest und am anderen Ende an den Spannrollenhalter befestigt sind.

In der Grundeinstellung ist das Kraftspeicherelement so eingestellt, dass es eine Kraft gerade unterhalb der vom Werk voreingestellten Zugmittelspannung liefert. Sobald diese Zugmittelspannung durch Dehnung des Zugmittels oder dergleichen nachlässt, zieht das Kraftspeicherelement die Knarren-, Sperr- oder Freilaufeinrichtung auf die nächste Stufe. Selbst ein Bruch einer der Federn des Kraftspeicherelements würde dann nicht zum Ausfall des Antriebes führen, da ja die Zugmittelspannung durch die Sperre der Sperreinrichtung immer noch aufrechterhalten wird. Diese Sperre hat auch den Effekt, dass die Federn der Kraftspeichereinrichtung nicht ständig unter Maximalspannung stehen, so dass ein Federbruch auch wenig zu befürchten ist.

Die Antriebseinrichtung weist weiter bevorzugt in an sich bekannter Weise ein Motorantriebsaggregat zum Antreiben eines Antriebsrades, auf wobei das Zugmittel um das Antriebsrad und um eine als die Spannrolle dienende Umlenkrolle geführt ist. An das Zugmittel ist dann bevorzugt eine Kopplungseinrichtung befestigt, an welcher ein an einen Flügel des Abschlusses, insbesondere an ein Torblatt - im Falle eines Garagentorantriebes -, anschließbaren, in einer Führungsschiene zur translatorischen Bewegung geführten Mitnehmer ankoppelbar ist. In dieser Ausgestaltung der Erfindung ist dann die Umlenkrolle weiter bevorzugt mit der Knarren-, Sperr- oder Freilaufeinrichtung verbunden. Die Anordnung ist dabei derart, dass die Knarren-, Sperr- oder Freilaufeinrichtung ein Voneinander-Entfernen von Umlenkrolle und Antriebsrad zulässt - dies würde einer Weiterspannung des Zugmittels entsprechen, sich aber gegen ein Zueinanderbewegen der Umlenkrolle und des Antriebsrades sperrt.

*Eine vorteilhafte Ausgestaltung der vorliegenden Erfindung die besonders einfach im Aufbau und in der Montage ist*, ist dadurch gekennzeichnet, dass das Kraftspeicherelement eine Druckfeder, insbesondere eine Schraubendruckfeder, aufweist, welche die Knarren-, Sperr- oder Freilaufeinrichtung in die Spannrichtung vorspannt.

Zur Verhinderung, dass eine Druckfeder aufgrund ihrer Belastung nach links oder rechts ausbricht, sind Druckfedern üblicherweise mit umgebenden und/oder in sie einfassenden Führungen versehen. Selbstverständlich könnte eine solche Führung ohne weiteres an einem ortsfesten Gegenlager der Druckfeder vorgesehen sein, an welchem vorbei das bewegliche Element der Knarren-, Sperr- oder Freilaufeinrichtung derartig geführt ist, dass es durch die Druckfeder in Spannrichtung vorgespannt wird.

Gemäß einem vorteilhaften Ausführungsbeispiel der Erfindung ist aber vorgesehen, dass die Druckfeder an einem beweglichen Element einer Rasteinrichtung der Sperreinrichtung geführt ist. So ist insbesondere dann, wenn die Rasteinrichtung ein Widerlagerelement und das z. B. längliche Erfassungselement umfasst, die Druckfeder an dem Erfassungselement geführt. Mit 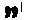 länglich" ist dabei nicht unbedingt zu verstehen, dass das Erfassungselement sich hauptsächlich in eine Richtung erstreckt, das Erfassungselement muss nur eine bestimmte Strecke in Richtung der Spannrichtung liefern, um für mehrere Raststufen zu sorgen.

Eine besonders vorteilhafte Ausgestaltung ist dann erreichbar, wenn die Funktion des oben erwähnten elastischen Elementes, welches die Rasteinrichtung in die Raststellung elastisch vorspannt, d. h. z. B. die Funktion der Blattfeder, ebenfalls durch die Druckfeder übernommen wird. Dies ist vorzugsweise dadurch erreichbar, dass die Druckfeder derart an dem sich in Spannrichtung erstreckenden Erfassungselement der durch dieses Erfassungselement, an welchem eine Reihe von Rast- oder Hakengliedern wie Sägezähnen ausgebildet sind, und ein durch diese Glieder einrastend erfassbares Widerlagerelement gebildeten Rasteinrichtung eingreift, dass sie das Erfassungselement einerseits in die Spannrichtung vorspannt, andererseits aber auch ein Drehmoment auf dasselbe ausübt, welches zum Vorspannen der Rasteinrichtung in die Raststellung einsetzbar ist.

In weiterer vorteilhafter Ausgestaltung erfasst das Erfassungselement der Rasteinrichtung einen Rast- oder Zahnabschnitt, insbesondere einen Rast- oder Zahnstangenabschnitt, der die Reihe von zum formschlüssigen, einrastenden Erfassen des Widerlagers ausgebildeten Rast- oder Hakengliedern aufweist, und einen Federführungsabschnitt, an dem die Druckfeder geführt ist. Der Druckfederführungsabschnitt kann selbstverständlich einen hülsenartigen Bereich zum Umgeben der Feder aufweisen oder durch einen solchen gebildet sein, einfacher ist aber, wenn der Druckfederführungsabschnitt stangenartig ausgebildet ist, so dass er durch die Druckfeder greifen kann. In vorteilhafter Ausgestaltung sind somit sowohl der Rast- oder Zahnabschnitt als auch der Druckfederführungsabschnitt stangenartig ausgebildet. Die beiden Abschnitte sind vorzugsweise nebeneinander mit Abstand dazwischen ausgebildet und weiter vorzugsweise dabei miteinander verbunden, vorzugsweise über wenigstens einen Steg.

Dabei ist es vorteilhaft, wenn das Erfassungselement an seinem Rast- oder Zahnabschnitt schwenkbar an einen Spannrollenhalter angelenkt ist. Da die Kraft der Druckfeder aufgrund der mit Abstand nebeneinander sich erstreckenden beiden Abschnitte des Erfassungselementes mit Abstand von der schwenkbaren Anlenkung erfolgt, ist so in einfacher Art und Weise die Kraft der Feder nicht nur zur Erzeugung der Vorspannkraft in Spannrichtung, sondern auch zum Erzeugen des oben genannten Drehmomentes zum Halten der Rasteinrichtung in ihrer Sperrstellung einsetzbar. Beispielsweise können die beiden Abschnitte des Erfassungselementes (im wesentlichen) parallel zueinander geführt sein. Schaut man dabei senkrecht zur Spannrichtung auf das Erfassungselement, so kann dieses gemäss einer besonders vorteilhaften Ausgestaltung der Erfindung U-förmig ausgebildet sein, wobei die beiden U-Schenkel die eben geschilderten Abschnitte, einen zum Liefern der Reihe von Rast- oder Hakengliedern und einen für die Führung der Druckfeder, bilden.

An dem Steg oder im Bereich des Stegs, der die beiden Abschnitte miteinander verbindet, ist weiter vorzugsweise neben der oben erwähnten Anschlagseinrichtung, die das Widerlagerelement in einer Anfangsstufe erfasst, auch ein Federsitz oder der Federanschlag für die Druckfeder ausgebildet. In seiner Ausbildung als U-Steg kann er zum Liefern dieser Funktionen mit einem oder mehreren hervorstehenden Ansätzen verlängert ausgebildet sein.

Zum Bilden eines ortsfesten Gegenlagers für die Druckfeder ist gemäss einer weiteren vorteilhaften Ausgestaltung der Erfindung eine Gegenanschlageinrichtung für die Druckfeder vorgesehen, die relativ zum Widerlagerelement ortsfest, von diesem in gegenüber Spannrichtung entgegengesetzter Richtung beabstandet angeordnet ist. Diese Gegenanschlageinrichtung, die auch durch eine weggebogene Lasche eines ortsfest z. B. im Bereich der Führungsschiene des Torantriebes bzw. der Antriebsvorrichtung, anzubringendes, insbesondere zu verspannendes Spannbleches gebildet sein kann, weist weiter bevorzugt eine Gegenlagerplatte oder ein Gegenlagerblech mit einer Öffnung auf. Diese Öffnung dient dazu, den Druckfederführungsabschnitt des Erfassungselementes hindurch zu führen, wobei die Öffnungsberandung zum Abstützen der Feder dient.

Ausführungsbeispiele der Erfindung werden im folgenden anhand der beigefügten Zeichnung näher erläutert. Darin zeigen:
- Fig. 1: eine teilweise geschnittene Unteransicht auf ein Zugmittelgetriebe eines Garagentorantriebes mit einer Zugmittelspannvorrichtung in einer werkseitig voreingestellten Anfangsstufe;
- Fig. 2: eine teilweise geschnittene Unteransicht auf die Zugmittelspannvorrichtung während eines Spannvorganges;
- Fig. 3: eine Ansicht vergleichbar von Fig. 2 auf die Zugmittelspannvorrichtung in einer Endlage;
- Fig. 4: eine teilweise geschnittene Unteransicht auf ein Zugmittelgetriebe eines Garagentorantriebes mit einer Zugmittelspannvorrichtung in einer werkseitig voreingestellten Anfangsstufe; und
- Fig. 5: eine teilweise geschnittene Unteransicht auf die Zugmittelspannvorrichtung während eines Spannvorganges.

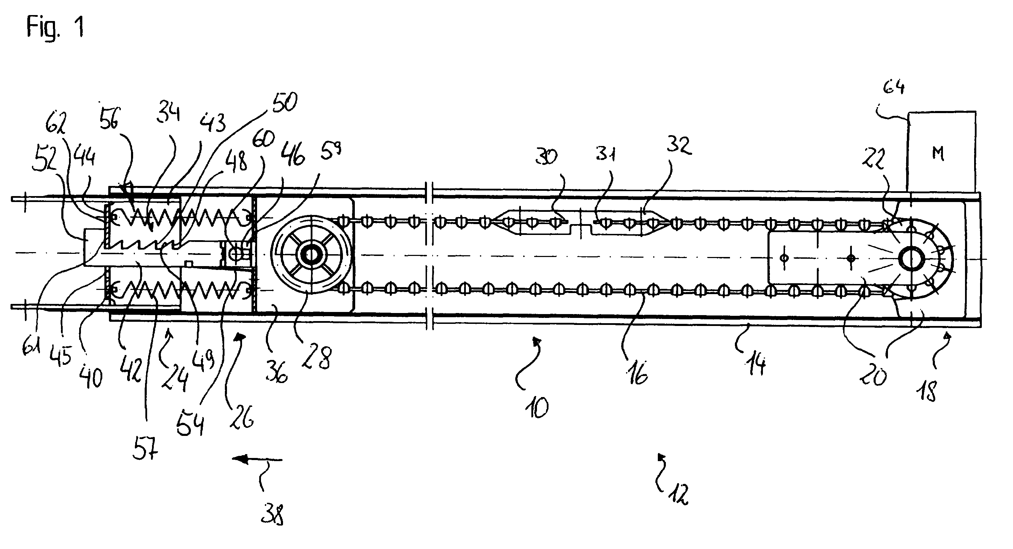

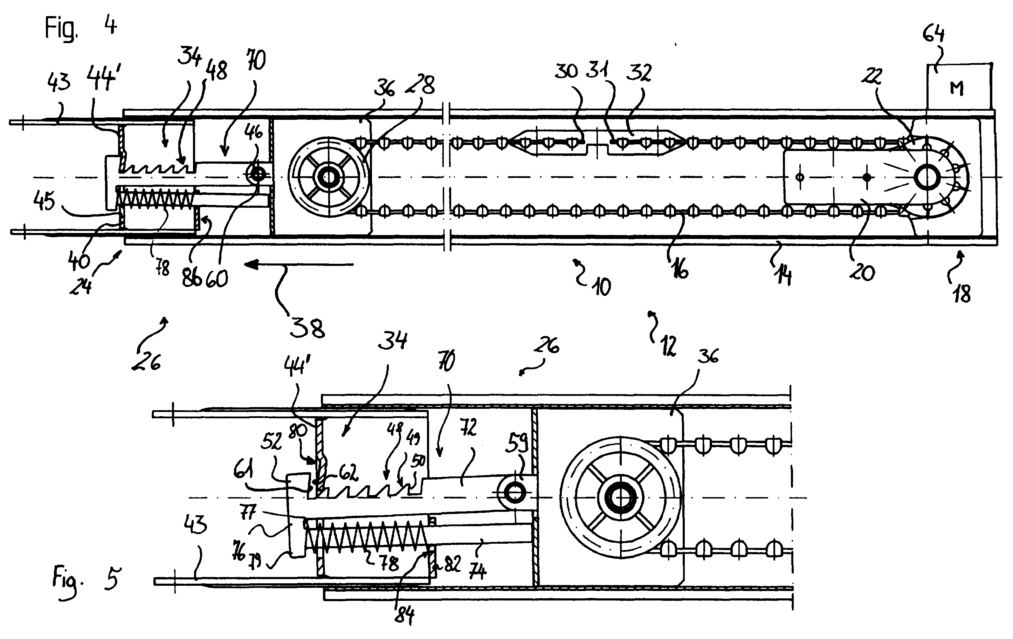

In den Fig. 1 und 4 ist ein Zugmittelgetriebe 10 eines insgesamt mit 12 bezeichneten Torantriebes für ein Garagentor dargestellt. Der Torantrieb 12 umfasst eine C-profilförmige Führungsschiene 14, innerhalb der ein nicht dargestellter aber hinlänglich bekannter, an das Torblatt angekoppelter Mitnehmer von einer Öffnungslage in eine Schließlage und umgekehrt verschiebbar ist. Zum Antreiben des Mitnehmers weist das Zugmittelgetriebe 10 ein Zugmittel in Form eines Zahngurtes 16 auf, das an einem Ende 18 der Führungsschiene 14 um ein in einer Halterung 20 gelagertes, von einem schematisch dargestellten Motorantriebsaggregat 64 antreibbares Antriebsrad 22 herumgelegt ist. Am anderen Ende 24 der Führungsschiene 14 weist das Zugmittelgetriebe 10 eine Zugmittelspannvorrichtung 26 auf, mittels der die Spannung des Zahngurtes 16 über Bewegung einer als Spannrolle wirkenden Umlenkrolle 28 einstell- und aufrechterhaltbar ist.

Der Zahngurt 16 ist am zweiten Ende 24 der Führungsschiene 14 um die Umlenkrolle 28 herumgeführt. Die beiden Enden 30, 31 des Zahngurtes 16 sind in an sich bekannter Weise mittels eines Gurtschlosses 32 zusammengeschlossen, das als Kopplungseinrichtung zum Ankoppeln des Mitnehmers dient. Dadurch ist der Zahngurt 16 zu einer Endlosschleife geschlossen, wobei durch Bewegung des Antriebsrades 22 in die eine Richtung das Gurtschloss 32 und damit der daran angekoppelte Mitnehmer und somit das Torblatt (nicht dargestellt) in eine erste Richtung und durch Drehen des Antriebsrades 22 in die entgegengesetzte Richtung in eine zweite Richtung bewegbar ist.

Die Zugmittelspannvorrichtung 26 weist eine Knarren- oder Sperreinrichtung 34 auf, die mit einem die Umlenkrolle 28 lagernden Umlenkrollenhalter 36 verbunden ist und eine Bewegung der Umlenkrolle 28 in eine Spannrichtung 38, d. h. von dem Antriebsrad 22 weg, zulässt, in der Gegenrichtung aber sperrt.

Die Sperreinrichtung 34 weist bei einer ersten, in den Fig. 1 bis 3 gezeigten Ausführungsform eine im wesentlichen durch ein ortsfestes Widerlagerelement 40 und eine Zahnstange 42, welche an dem Widerlagerelement 40 einrastbar ist, gebildete Rasteinrichtung auf. Das Widerlagerelement 40 wird durch ein relativ zur Führungsschiene 14 in wählbarer Anordnung festlegbares Spannblech 44 gebildet, welches innerhalb eines im Bereich der Toröffnungsberandung (nicht dargestellt) befestigbaren U-Profilstück 43 sich quer zur Längsrichtung der Führungsschiene 14 erstreckend angeordnet ist und eine Öffnung 45, durch welche die Zahnstange 42 hindurch greift, aufweist.

Die Zahnstange 42 ist mittels eines Bolzens 46 um eine Achse 60 schwenkbar an dem Umlenkrollenhalter 36 befestigt. Sie weist eine Reihe von Rast- oder Hakengliedern in Form von Sägezähnen 48, welche jeweils mit einer Anlaufschulter 49 und einer Erfassungsfläche 50 zum hintergreifenden Erfassen der die Öffnung 45 berandenden Teile des Spannbleches 44 versehen sind, auf. Am freien Ende ist die Zahnstange 42 mit einer als Anschlageinrichtung wirkenden Flanschausbildung 52 versehen, welche eine größere Querausdehnung als die Ausdehnung der Öffnung 45 aufweist. Die Sägezähne 48 sind dagegen mit einer geringeren Querausdehnung als die Öffnung 45 versehen, so dass sie mit der Anlaufschulter 49 über die Berandung der Öffnung 45 gleiten können, bis die Erfassungsfläche 50 die Öffnungsberandung einrastend hintergreift.

Eine Blattfeder 54 spannt die Zahnstange in ihre Erfassungsstellung mit dem Widerlagerelement 40, d. h. insbesondere der Berandung der Öffnung 45 vor.

Weiter umfasst die Zugmittelspannvorrichtung 26 ein durch zwei Schraubenzugfedern 56 und 57 gebildetes Kraftspeicherelement. Die beiden Schraubenzugfeldern 56, 57 sind an einem Ende an dem ortsfesten Spannblech 44 befestigt. Mit dem anderen Ende sind die beiden Schraubenzugfedern 56, 57 an dem Spannrollenhalter 36 befestigt. Die Zugspannung der Schraubenzugfedern 56, 57 ist derart bemessen, dass sie in der in Fig.1 gezeigten werkseitig eingestellten Anfangsstufe knapp unterhalb der entgegen der Spannrichtung 38 wirkenden Zugspannung des Zahngurtes 16 liegt.

Damit besteht die Zugmittelspannvorrichtung 26 der ersten Ausführungsform im wesentlichen aus der Zahnstange 42, die auch als Stufenhaken bezeichnet werden kann, dem Umlenkrollenhalter 36, mit einem zum Durchgreifen des Bolzens 46 vorgesehenen Anschlusszapfen 59, der Blattfeder 54, den Schraubenzugfedern 56, 57 und dem Spannblech 44. Die Zahnstange 42 ist durch den Bolzen 46 um die Achse 60 schwenkbar mit dem Umlenkrollenhalte 36 verbunden.

Durch die Schließ- oder Öffnungskraft des zu bewegenden Tores (nicht dargestellt) wird der Zahngurt 16 auf Zug beansprucht. Der Zahngurt 16 wird dadurch im Laufe der Lebenszeit der Antriebsvorrichtung 12 gedehnt. Inelastische Dehnungen führen dabei zu einer Verlängerung des Zahngurtes 16.

Fig. 1 zeigt die werkseitig eingestellte Vorspannung des Zugmittels, d.h. des Zahngurtes 16. Die eingestellte Vorspannung ist etwas größer als die Zugkraft der beiden Schraubenzugfedern 56, 57. Dadurch liegt eine Erfassungsfläche 61 der Flanschausbildung 52 auf einer die Öffnung 45 berandenden Stützfläche 62 des Spannbleches 44 auf.

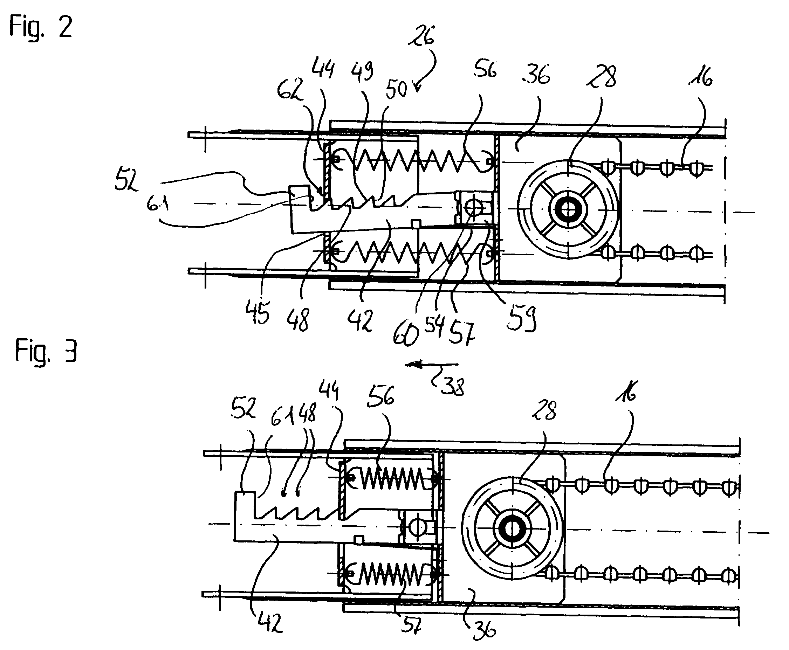

Lässt die Zugmittelspannung im Laufe der Zeit nach, so wird die Zugkraft der Schraubenzugfedern 56, 57 größer als diese Zugmittelspannung. Der dann automatisch erfolgende Vorgang ist in Fig. 2 angedeutet. Die Schraubenzugfedern 56, 57 ziehen den Umlenkrollenhalter 36 weiter in Spannrichtung 38, dabei gleitet die Berandung der Öffnung 45 über die Anlaufschulter 49 des auf die Flanschausbildung 52 folgenden Sägezahnes 48, bis dieser die Öffnung 45 passiert hat und mit seiner Erfassungsfläche 50 die Stützfläche 62 erfassend am Spannblech 44 einrastet. Während des Gleitens des Sägezahnes 48 auf seiner Anlaufschulter 49 wird die Zahnstange 42 entgegen der Vorspannung der Blattfeder 54 um die Achse 60 verschwenkt.

Bei einer Verlängerung des Zahngurtes 16 in dem Ausmaße, dass eine Weiterspannung der Zugmittelspannvorrichtung 26 in Spannrichtung 38 um die doppelte Teilung der Zähne 48 der Zahnstange 42 erfolgt, rastet der zweite Sägezahn 48 am Spannblech 44 ein. Die Blattfeder 54 bringt dabei stets die Zahnstange 42 - die man auch als Stufenhaken bezeichnen kann - wieder in Sperrstellung.

Fig. 3 zeigt die Endlage, in der der letzte Sägezahn 48 das Spannblech 44 erfasst.

Gemäß dem in den Fig. 4 und 5 gezeigten und im folgenden beschriebenen Ausführungsbeispiel weist die Sperreinrichtung 34 ebenfalls die im wesentlichen durch das ortsfeste Widerlagerelement 40 und ein Erfassungselement 70, welches sich in Spannrichtung 38 erstreckt, gegenüber dem Widerlagerelement 40 in Spannrichtung 38 beweglich ist und an dem Widerlagerelement 40 einrastbar ist, gebildete Rasteinrichtung auf. Das Widerlagerelement 40 wird im wesentlichen durch ein relativ zur Führungsschiene 14 in wählbarer Anordnung festlegbares Spannblech 44' gebildet, welches innerhalb des im Bereich der Toröffnungsberandung (nicht dargestellt) befestigbaren U-Profilstücks 43 sich quer zur Längsrichtung der Führungsschiene 14 erstreckend angeordnet ist und die erste Öffnung 45 durch welche das Erfassungselement 70 hindurchgreift, aufweist.

Das Erfassungselement 70 weist einen stangenförmigen Rast- oder Zahnabschnitt 72, einen im wesentlichen parallel hierzu verlaufenden stangenförmigen Federführungsabschnitt 74 und einen diese beiden Abschnitte 72, 74 verbindenden Steg 76 auf. Der Steg 76 ist an einem Ende des Erfassungselementes 70 ausgebildet und verbindet die beiden stangenförmigen Abschnitte 74, 72, so dass das Erfassungselement 70 in Draufsicht im wesentlichen eine U-Form aufweist, wobei die beiden Abschnitte 72, 74, die U-Schenkel bilden. Das Erfassungselement 70 ist ansonsten in einem Ausführungsbeispiel als plattenförmiges Stahlblechstanzteil ausgebildet, auch eine Kombination mehrerer paralleler plattenförmiger Stanzteile, über Stege verbunden oder eine massive blockartige Ausbildung aus irgendeinem geeigneten Material ist denkbar.

Das Erfassungselement 70 ist an dem dem Steg 76 gegenüberliegenden Ende des Zahnabschnittes 72 mittels des Bolzens 46 um die Achse 60 schwenkbar an dem Umlenkrollenhalter befestigt. Der Zahnabschnitt 72 weist eine Reihe von Rast- oder Hakengliedern in Form von Sägezähnen 48, welche jeweils mit der Anlaufschulter 49 und der Erfassungsfläche 50 zum hintergreifenden Erfassen der die erste Öffnung 45 berandenden

Teile des Spannbleches 44 versehen sind, auf. Der Steg 76 ist auf der Seite der Sägezähne 48 mit einer Verlängerung in Form der als Anschlageinrichtung für eine Anfangsstufe wirkenden Flanschausbildung 52 versehen. Im Bereich des Federführungsabschnittes 74 ist der Steg 76 an dem der Flanschausbildung 52 gegenüberliegenden Ende ebenfalls mit einer Verlängerung 78 versehen, welche zusammen mit dem Übergangsbereich 77 des Steges 76 zwischen den beiden Abschnitten 72, 74, als Federsitz für eine hiernach noch näher beschriebene Druckfeder 78 dient. Im Bereich des Steges 76 ist das Erfassungselement 70 damit mit einer größeren Querausdehnung als die Ausdehnung der Öffnung 45 versehen. Im Bereich der Sägezähne 48 ist das Erfassungselement 70 dagegen mit einer geringeren Querausdehnung als die Öffnung 45 versehen, so dass die Sägezähne 48 mit der Anlaufschulter 49 über die Berandung der ersten Öffnung 45 gleiten können, bis die Erfassungsfläche 50 die Öffnungsberandung einrastend hintergreift.

Die Flanschausbildung 52 ist zum Bilden der Anschlageinrichtung auf der den Sägezähnen 48 zugewandten Seite hin zu den Sägezähnen 48 - z. B. wie dies in den Figuren gezeigt ist - geneigt ausgebildet, wobei das Spannblech 44' im Bereich der ersten Öffnung 45 eine entsprechend geneigte Vertiefung 80 aufweist. Auf diese Weise ist in der in Fig. 1 gezeigten Anfangsstufe ein Hintergriff zwischen der Flanschausbildung 52 und dem Spannblech 44' möglich. Auch die Erfassungsflächen 50 der Sägezähne 48 sind zum Hintergreifen der die erste Öffnung 45 begrenzenden Öffnungsberandung - Stützfläche 62 - durch Eingreifen in die Vertiefung 80 geneigt ausgebildet.

In Richtung entgegen der Spannrichtung 38 beabstandet zu dem Widerlagerelement 40 ist noch eine Gegenanschlagseinrichtung 82 für die Druckfeder 78 ortsfest, z. B. am U-Profilstück 43 befestigt, angeordnet. Die Gegenanschlagseinrichtung 82 weist eine zweite Öffnung 84 auf, durch welche der Federführungsabschnitt 74 geführt ist. Die Gegenanschlagseinrichtung 82 endet im Bereich zwischen den beiden Abschnitten 72 und 74 des Erfassungselementes 70. Die Gegenanschlagseinrichtung 82 ist in einem nicht dargestellten Beispiel als gesondertes, gegenüber dem Widerlagerelement 40 des Spannbleches 44 verstellbares Bauteil ausgeführt, beispielsweise als ebenfalls im U-Profilstück 43 z. B. verspann- oder verschraubbares Gegenlagerblech. In der gezeigten Ausführung ist die Gegenanschlagseinrichtung durch eine abgeknickte Lasche 86 des Spannbleches 44 gebildet.

Die Druckfeder 78 ist über den Federführungsabschnitt 74 geführt und sitzt mit einem Ende auf dem durch die Verlängerung 79 des Steges 76 gebildeten Federsitz und mit ihrem anderen Ende auf dem Gegentagerblech 84 auf. Die als Schraubendruckfeder ausgebildete Druckfeder 78 drückt somit das Erfassungselement 72 und damit den über den Bolzen 46 mit diesem Erfassungselement 70 verbundenen Umlenkrollenhalter 36 in Spannrichtung 38. Die Druckspannung der somit als Kraftspeicherelement zum Vorspannen der Knarren- oder Sperreinrichtung 34 in Spannrichtung 38 wirkenden Druckfeder 78 ist derart bemessen, dass sie in der in Fig. 4 gezeigten werkseitig eingestellten Anfangsstufe knapp unterhalb der entgegen der Spannrichtung 38 wirkenden Zugspannung des Zahngurtes 16 liegt. Andererseits wirkt die Druckspannung der Druckfeder 78 aber seitlich versetzt zur Anlenkung des Erfassungselementes 70 über den Bolzen an den Umlenkrollenhalter 36. Damit wird auf das Erfassungselement 70 ein Drehmoment übertragen, welches die durch das Widerlagerelement 40 und das Erfassungselement 70 gebildete Rasteinrichtung in ihrer Raststellung vorspannt, d. h. die Erfassungszähne 48 in ihre Erfassung an der Öffnungsberandung 62 vorspannt.

Damit besteht die Zugmittelspannvorrichtung 26 der zweiten Ausführungsform im wesentlichen aus dem Erfassungselement 70, das auch als Stufenhaken bezeichnet werden kann, dem Umlenkrollenhalter 36, mit einem zum Durchgreifen des Bolzens 46 vorgesehenen Anschlusszapfen 59, der Druckfeder 78 und dem Spannblech 44'. Das Erfassungselement 70 ist durch den Bolzen 46 um die Achse 60 schwenkbar mit dem Umlenkrollenhalter 36 verbunden. Die Druckfeder 78 wird von dem Federführungsteil 74, das auch als Rückenteil des Stufenhakens bezeichnet werden kann, aufgenommen und stützt sich auf einem ortsfesten Federsitz auf der Gegenanschlagseinrichtung 82 ab, die hier durch eine weggebogene, z. B. hochstehende, Lasche 86 des Spannbleches 44 gebildet ist.

Durch die Schließ- oder Öffnungskraft des zu bewegenden Torblattes (nicht dargestellt) wird der Zahngurt 16 auf Zug beansprucht. Der Zahngurt 16 wird dadurch im Laufe der Lebenszeit der Antriebsvorrichtung 12 gedehnt. Inelastische Dehnungen führen dabei zu einer bleibenden Verlängerung des Zahngurtes 16.

Fig. 4 zeigt die werkseitig eingestellte Vorspannung des Zugmittels, d. h. im dargestellten Beispiel des Zahngurtes 16. Die eingestellte Vorspannung ist etwas größer als die Druckkraft der Druckfeder 78. Dadurch liegt die geneigte Erfassungsfläche 61 der Flanschausbildung 52 auf der die Öffnung 45 berandenden, die Vertiefung 80 aufweisenden Stützfläche 62 des Spannbleches 44' auf.

Lässt die Zugmittelspannung im Laufe der Zeit nach, so wird die Druckkraft der Schraubendruckfeder 78 größer als diese Zugmittelspannung. Der dann automatisch erfolgende Vorgang ist in Fig. 5 angedeutet. Die Druckfeder 78 drückt den Umlenkrollenhalter 36 weiter in Spannrichtung 38. Bei der Verlängerung des Zugmittels durch die inelastische Dehnung ( 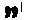 bleibende Dehnung") wird also der Umlenkrollenhalter 36 durch die Druckfeder 78 in Pfeilrichtung - Spannrichtung 38 - bewegt. Die Anlaufschulter 49 des nun folgenden Sägezahnes 48 gleitet über die Berandung der ersten Öffnung 45, bis der Sägezahn die erste Öffnung 45 passiert hat und mit seiner Erfassungsfläche 50 die Stützfläche 62 erfassend am Spannblech 44 einrastet. Während des Gleitens des Sägezahnes 48 auf seiner Anlaufschulter 49 wird das Erfassungselement 70 um die Achse 60 verschwenkt. Da die Druckfeder 78 versetzt zu der Achse 60 angeordnet ist, bringt sie das Erfassungselement 70 in die Sperrstellung und hält sie dort.

Bei einer Verlängerung des Zahngurtes 16 in dem Ausmaße, dass eine Weiterspannung der Zugmittelspannvorrichtung 26 in Spannrichtung 38 um die doppelte Teilung der Zähne 48 des Erfassungselementes 70 erfolgt, rastet der zweite Sägezahn 48 am Spannblech 44' ein. Die Druckfeder 78 bringt dabei stets das Erfassungselement 70 - das man auch als Stufenhaken bezeichnen kann - wieder in Sperrstellung.

## Patentansprüche

1. Antriebsvorrichtung (12) zum Antreiben von Toren, insbesondere Garagentoren, Türen, Fenstern oder dergleichen zwischen einer Öffnungs- und einer Schließstellung bewegbaren Abschlüssen von Bauwerken oder Einfriedungen, mit einem Zugmittelgetriebe (10), das ein Zugmittel, insbesondere einen Zahngurt (16), zur Kraftübertragung und eine Zugmittelspannvorrichtung (26) zur Aufrechterhaltung einer Zugmittelspannung des Zugmittels (16) umfasst, wobei die Zugmittelspannvorrichtung (26) ein Kraftspeicherelement (56, 56) zum Liefern einer die Zugmittelspannung aufrechterhaltenden Kraft aufweist,
**dadurch gekennzeichnet**,
dass die Zugmittelspannvorrichtung (26) weiter eine Knarreneinrichtung oder dergleichen in einer Richtung sperrende und in die Gegenrichtung bewegbare Sperr- oder Freilaufeinrichtung (34) umfasst, die derart angeordnet und/oder ausgebildet ist, dass sie ein Spannen oder Weiterspannen des Zugmittels (16) durch Ziehen, insbesondere über eine Spannrolle, an dem Zugmittel (16) in einer Spannrichtung (38) zulässt, in Gegenrichtung aber sperrt,
und dass das Kraftspeicherelement (56, 57) die Knarren-, Sperr- oder Freilaufeinrichtung (34) in die Spannrichtung (38) vorspannt.

2. Antriebsvorrichtung nach Anspruch 1,
**dadurch gekennzeichnet**,
dass die Sperreinrichtung (34) eine Rasteinrichtung (40/44/42/48) zum stufenweisen Weiterspannen des Zugmittels (16) bei nachlassender Zugspannung aufweist.

3. Antriebsvorrichtung nach Anspruch 2,
**dadurch gekennzeichnet**,
dass die Rasteinrichtung (40/44/42/48) ein Widerlagerelement (40) und ein längliches Erfassungselement (42), insbesondere eine Rast- oder Zahnstange (42), mit einer Reihe von zum formschlüssigen, einrastenden Erfassen des Widerlagers (40) ausgebildeten Rast- oder Hakengliedern (48), insbesondere Sägezähnen (48), aufweist, wobei das Widerlagerelement (40) oder das Erfassungselement (42) mit dem Zugmittel (16) zum Spannen desselben verbunden und das andere dieser beiden Elemente (40, 42) ortsfest, insbesondere zur einstellbaren ortsfesten Anordnung, ausgebildet ist.

4. Antriebsvorrichtung nach Anspruch 3,
**dadurch gekennzeichnet**,
dass die Rasteinrichtung (40/44/42/48) weiter ein elastisches Element (54), insbesondere eine Feder und mehr insbesondere eine Blattfeder (54), zum elastischen Vorspannen von Widerlagerelement (40) und/oder Erfassungselement (42) in die Raststellung aufweist.

5. Antriebsvorrichtung nach einem der Ansprüche 3 oder 4,
**dadurch gekennzeichnet**,
dass das längliche Erfassungselement (42) an seinem freien Ende mit einer gegenüber den Rast- oder Hakengliedern (48) größer ausgebildeten Anschlageinrichtung (52) zum Erfassen des Widerlagerelements (40) in einer Anfangsstufe aufweist.

6. Antriebsvorrichtung nach einem der Ansprüche 3 bis 5,
**dadurch gekennzeichnet**,
dass das mit dem Zugmittel (16) verbundene Element (42) der Rasteinrichtung (40/44/42/48) an einem Spannrollenhalter (36), an welchem eine Spannrolle (28) drehbar gelagert ist, schwenkbar angelenkt ist.

7. Antriebsvorrichtung nach einem der Ansprüche 1 bis 6,
**dadurch gekennzeichnet**,
dass das Kraftspeicherelement wenigstens eine Feder, insbesondere wenigstens eine Schraubenzugfeder (56, 57), aufweist, welche die Knarren-, Sperr- oder Freilaufeinrichtung (34) in die Spannrichtung (38) vorspannt.

8. Antriebsvorrichtung nach Anspruch 6 und Anspruch 7,
**dadurch gekennzeichnet**,
dass das Kraftspeicherelement zwei Schraubenzugfedern (56, 57) aufweist, die jeweils an einem Ende ortsfest und am anderen Ende an den Spannrollenhalter (36) befestigt sind.

9. Antriebsvorrichtung nach einem der Ansprüche 1 bis 8,
**gekennzeichnet durch** ein Motorantriebsaggregat (64) zum Antreiben eines Antriebsrades (22), wobei das Zugmittel (16) um das Antriebsrad (22) und um eine als Spannrolle dienende Umlenkrolle (28) geführt ist und wobei eine Kopplungseinrichtung (32) zum Ankoppeln eines an einen Flügel des Abschlusses, insbesondere an ein Torblatt, anschließbaren, in einer Führungsschiene (14) angeordneten Zugmittel (16) befestigt ist, wobei die Umlenkrolle mit der Knarren-, Sperr- oder Freilaufeinrichtung (34) verbunden ist, so dass die Knarren-, Sperr- oder Freilaufeinrichtung (34) eine translatorische Bewegung der Umlenkrolle (28) von dem Antriebsrad (22) weg zulässt, sich aber gegen eine translatorische Bewegung der Umlenkrolle (28) zu dem Antriebsrad (22) hin sperrt.

10. Antriebsvorrichtung (10) nach einem der Ansprüche 1 bis 9,
**dadurch gekennzeichnet**,
dass das Kraftspeicherelement wenigstens eine Druckfeder (78), insbesondere eine Schraubendruckfeder, ist oder aufweist, welche die Knarren-, Sperr- oder Freilaufeinrichtung (34) in die Spannrichtung (38) vorspannt.

11. Antriebsvorrichtung nach Anspruch 2 und nach Anspruch 10,
**dadurch gekennzeichnet**,
dass die Druckfeder (78), derart ausgebildet und angeordnet ist, dass sie die Rasteinrichtung (40/44/70/48) in die Raststellung elastisch vorspannt.

12. Antriebsvorrichtung nach Anspruch 11 und nach Anspruch 3,
**dadurch gekennzeichnet**,
dass die Druckfeder (78) derart an dem Erfassungselement (70) angreift, dass sie es einerseits in die Spannrichtung (38) vorspannt, andererseits aber auch ein Drehmoment auf dasselbe zum Vorspannen der Rast- oder Hakenglieder (48) in die Erfassung mit dem Widerlagerelement (40) ausübt.

13. Antriebsvorrichtung nach Anspruch 12,
**dadurch gekennzeichnet**,
dass die Druckfeder (78) an dem Erfassungselement (70) geführt ist.

14. Antriebsvorrichtung nach Anspruch 13,
**dadurch gekennzeichnet**,
dass das Erfassungselement (70) einen, insbesondere stangenförmigen, Rast- oder Zahnabschnitt (72), der die Reihe von Rast- oder Hakenglieder (48) aufweist, und einen, insbesondere stangenförmigen, Federführungsabschnitt (74) aufweist, über und/oder durch den die Druckfeder (78) geführt ist.

15. Antriebsvorrichtung nach Anspruch 14,
**dadurch gekennzeichnet**,
dass die beiden Abschnitte (72, 74) des Erfassungselementes (70), vorzugsweise in länglicher wie z. B. in der stangenförmigen Ausbildung, nebeneinander mit Abstand dazwischen angeordnet sind und über wenigstens einen Steg (76) miteinander verbunden sind, wobei sich die Abschnitte (72, 74) weiter vorzugsweise im wesentlichen in Spannrichtung (38) erstrecken.

16. Antriebsvorrichtung nach einem der Ansprüche 14 oder 15,
**dadurch gekennzeichnet**,
dass das Erfassungselement (70) mit dem Zahnabschnitt (72) an einen Spannrollenhalter (36), an welchem eine Spannrolle (38) drehbar gelagert ist, schwenkbar angelenkt ist.

17. Antriebsvorrichtung nach Anspruch 15 oder Anspruch 16,
**dadurch gekennzeichnet**,
dass am Steg (76) oder im Bereich des Steges (76) eine Anschlageinrichtung (52) zum Erfassen des Widerlagerelementes (40) in einer Anfangsstufe und ein Federsitz (77, 79) für die Druckfeder (78) ausgebildet ist.

18. Antriebsvorrichtung nach einem der voranstehenden Ansprüche,
**dadurch gekennzeichnet**,
dass das Erfassungselement (70) in Sicht senkrecht zur Spannrichtung (38) gesehen U-förmig ausgebildet ist, wobei der Rast- oder Zahnabschnitt (72) und der Druckfederabschnitt (74) an den U-Schenkeln ausgebildet ist und der Federsitz (77, 79) für die Druckfeder (78) an dem U-Steg (76) ausgebildet ist.

19. Antriebsvorrichtung nach einem der Ansprüche 10 bis 18,
**gekennzeichnet durch**
eine Gegenanschlagseinrichtung (82) für die Druckfeder (78), die relativ zum Widerlagerelement (40) ortsfest, von diesem in gegenüber der Spannrichtung (38) entgegengesetzter Richtung beabstandet angeordnet ist.

20. Antriebsvorrichtung nach Anspruch 19,
**dadurch gekennzeichnet**,
dass die Gegenanschlagseinrichtung (82) eine Gegenlagerplatte oder Gegenlagerblech oder eine Lasche (86) an einem Spannblech (44) aufweist, wobei die Gegenlagerplatte, das Gegenlagerblech oder die Lasche (86) mit einer Öffnung (84) versehen sind, durch welche der Federführungsabschnitt (74) des Erfassungselementes (70) geführt ist, wobei die Berandung dieser Öffnung (84) in der Lasche (86), dem Gegenlagerblech bzw. in der Gegenlagerplatte als ortsfester Federsitz für die Druckfeder (78) dient.

21. Zugmittelspannvorrichtung für eine Antriebsvorrichtung nach einem der Ansprüche 1 bis 20, mit einem Kraftspeicherelement (56, 57) zum Liefern einer die Zugmittelspannung eines zu spannenden Zugmittels (16) aufrechterhaltenden Kraft,
**gekennzeichnet durch**
eine Knarreneinrichtung oder dergleichem in einer Richtung sperrende und in die Gegenrichtung bewegbare Sperr- oder Freilaufeinrichtung (34) umfasst, die derart angeordnet und/oder ausgebildet ist, dass sie ein Spannen oder Weiterspannen des Zugmittels (16) durch Ziehen, insbesondere über an eine Spannrolle, an dem Zugmittel (16) in einer Spannrichtung (38) zulässt, in Gegenrichtung aber sperrt, wobei das Kraftspeicherelement (56, 57) die Knarren-, Sperr- oder Freilaufeinrichtung (34) in die Spannrichtung (38) vorspannt.

22. Zugmittelspannvorrichtung nach Anspruch 21,
**dadurch gekennzeichnet**,
dass das Kraftspeicherelement wenigstens eine Druckfeder (78), insbesondere eine Schraubendruckfeder, ist oder aufweist.
